# EUROPÄISCHE PATENTSCHRIFT

(11) **EP 3 745 288 B1**
(45) Veröffentlichungstag und Bekanntmachung des Hinweises auf die Patenterteilung: **29.07.2026**
(21) Anmeldenummer: 20174605.4
(22) Anmeldetag: 14.05.2020
(51) Int. Cl.: G06F 21/31, H04L 9/40, H04W 12/06, G06F 21/34

(54) **VERFAHREN UND SYSTEM ZUR AUTORISIERUNG EINER PROZESSAUSFÜHRUNG**
METHOD AND SYSTEM FOR AUTHORISING THE IMPLEMENTATION OF A PROCESS
PROCÉDÉ ET SYSTÈME D'AUTORISATION D'UNE EXÉCUTION DE PROCESSUS

(30) Priorität: 28.05.2019 DE 102019207840
(43) Veröffentlichungstag der Anmeldung: 02.12.2020
(73) Patentinhaber: BSH Hausgeräte GmbH, 81739 München (DE)
(72) Erfinder: Wörner, Andreas, 81927 München (DE); Söllner, Christoph, 81475 München (DE)

(56) Entgegenhaltungen:
- DE-A1- 102012 222 248
- DE-A1- 102016 225 354
- US-A1- 2005 044 385
- US-A1- 2015 372 754
- US-A1- 2016 036 809

## Beschreibung

Die Erfindung betrifft ein System und ein entsprechendes Verfahren, die eine sichere und eine komfortable Ausführung eines Prozesses der Informationstechnologie (IT) ermöglichen.

Bei bestimmten sicherheitsrelevanten IT-Prozessen, wie z.B. einem Bezahlvorgang oder einer Passwortänderung, kann es aus Sicherheitsgründen erforderlich sein, dass ein Nutzer den Prozess über einen ersten Kanal (z.B. an einem Smartphone oder an einem Computer) veranlasst und zusätzlich über einen separaten zweiten Kanal (z.B. mittels einer separat bereitgestellten Transaktionsnummer) bestätigt und/oder autorisiert. Eine derartige Authentisierungsmethode wird häufig als Zwei-Faktor-Authentisierung (2FA) bezeichnet. Die Druckschrift DE102012222248A1 beschreibt ein Verfahren, welches insbesondere einen gesicherten und autorisierten Remote- oder Fern-Kundendienst mittels einer 2-Wege-Kommunikation, basierend auf der Nutzung einer ersten Kommunikationsbeziehung zwischen dem Haushaltsgerät und der zentralen Einheit und einer zweiten Kommunikationsbeziehung über ein Kommunikationsendgerät, ermöglicht.

Das vorliegende Dokument befasst sich mit der technischen Aufgabe, den Komfort und/oder die Sicherheit einer mehrstufigen Authentisierungsmethode zu erhöhen.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein Verfahren zur Bestätigung eines durch einen Nutzer initiierten (IT-)Prozesses beschrieben. Der Prozess kann dabei an einer Zentraleinheit (insbesondere an einem Server) initiiert worden sein. Bei dem Prozess kann es sich um einen Prozess der Datenverarbeitung handeln. Beispielhafte Prozesse sind Prozesse in Zusammenhang mit Internetbanking (z.B. das Tätigen einer Überweisung), und/oder Prozesse bei der Festlegung eines Passwortes.

Das Verfahren kann das Ermitteln einer Eingabe des Nutzers in Bezug auf das Initiieren des Prozesses über einen ersten Kanal umfassen. Beispielsweise kann die Eingabe an einer Computereinheit (z.B. an einem Smartphone oder an einem Computer) erfasst und an eine Zentraleinheit übermittelt werden. Dabei kann im Rahmen der Eingabe ggf. bereits ein erster Faktor einer Mehr-Faktor-Authentisierung durchgeführt worden sein (z.B. durch Eingabe eines Benutzernamens und/oder eines Passwortes). Es kann dann bestimmt werden, dass die Ausführung des initiierten Prozesses eine Bestätigung durch den Nutzer über einen separaten zweiten Kanal erfordert. Der zweite Kanal kann dabei (wie in diesem Dokument beschrieben) ein oder mehrere erste und/oder zweite Hausgeräte des Haushalts umfassen, in dem sich der Nutzer befindet.

Der initiierte Prozess kann derart sein, dass die Ausführung des initiierten Prozesses eine Mehr-Faktor Authentisierung erfordert. Das in diesem Dokument beschriebene Verfahren zur Bestätigung des Prozesses kann einen Faktor einer solchen Mehr-Faktor Authentisierung zur Ausführung des initiierten Prozesses bilden.

Das Verfahren umfasst das Ermitteln einer Aktionsmenge zur Bestätigung des Prozesses. Mit anderen Worten, es kann eine Aktionsmenge ermittelt werden, die ein oder mehrere Aktionen anzeigt, die für eine erfolgreiche Bestätigung des Prozesses unter Einbindung des Nutzers und/oder unter Einbindung von ein oder mehreren Hausgeräten ausgeführt werden müssen. Insbesondere kann die Aktionsmenge ein oder mehrere erste Aktionen anzeigen, die durch den Nutzer an zumindest einem ersten Hausgerät in dem Haushalt, in dem sich der Nutzer befindet, auszuführen sind. Alternativ oder ergänzend kann die Aktionsmenge ein oder mehrere zweite Aktionen anzeigen, die von zumindest einem zweiten Hausgerät in dem Haushalt, in dem sich der Nutzer befindet, auszuführen sind, und deren Ausführung durch den Nutzer zu bestätigen ist.

Es kann somit eine bestimmte, eindeutige Aktionsmenge mit ein oder mehreren Aktionen festgelegt werden, die an und/oder von ein oder mehreren Hausgeräten des Haushalts, in dem sich der Nutzer befindet, auszuführen sind. Die Aktionsmenge kann dabei als eine Art "Transaktionsnummer" verwendet werden, um es einem Nutzer zu ermöglichen, die Ausführung eines initiierten Prozesses zu bestätigen und/oder zu autorisieren.

Das Verfahren umfasst ferner das Ermitteln von Bestätigungsdaten in Bezug auf die Aktionsmenge, insbesondere in Bezug auf die Ausführung der ein oder mehreren Aktionen der Aktionsmenge. Dabei können die Bestätigungsdaten anzeigen, ob die ein oder mehreren ersten Aktionen durch den Nutzer ausgeführt wurden, und/oder ob die ein oder mehreren zweiten Aktionen durch den Nutzer bestätigt wurden.

Das Verfahren kann z.B. umfassen, das Bewirken, dass von dem Nutzer zumindest eine (bevorzugt nach- und-nach bzw. sequentiell alle) in der Aktionsmenge spezifizierte erste Aktion an einem ersten Hausgerät ausgeführt wird. Es können dann Sensordaten in Bezug auf die erste Aktion, die von dem Nutzer an dem ersten Hausgerät ausgeführt wird oder wurde, (insbesondere mittels eines Sensors des ersten Hausgeräts) erfasst werden, wobei die Bestätigungsdaten die Sensordaten umfassen. Es kann somit auf Basis der Sensordaten ermittelt werden, ob die in der Aktionsmenge spezifizierten ein oder mehreren ersten Aktionen an den ein oder mehreren ersten Haugeräten tatsächlich durch den Nutzer ausgeführt wurden.

Alternativ oder ergänzend kann das Verfahren umfassen, das Bewirken, dass von einem zweiten Hausgerät eine in der Aktionsmenge spezifizierte zweite Aktion ausgeführt wird. Es können dann Eingabedaten des Nutzers in Bezug auf die zweite Aktion an einer Benutzerschnittstelle einer Computereinheit und/oder an einer Benutzerschnittstelle eines Hausgeräts des Haushalts erfasst werden, wobei die Bestätigungsdaten die Eingabedaten umfassen. Es kann somit auf Basis der Eingabedaten ermittelt werden, ob die in der Aktionsmenge spezifizierten ein oder mehreren zweiten Aktionen tatsächlich von dem Nutzer erkannt wurden.

Es kann dann in zuverlässiger Weise auf Basis der Bestätigungsdaten bestimmt werden, ob sich der Nutzer tatsächlich in dem Haushalt befindet und/oder ob die Bestätigung des Prozesses erfolgreich war oder nicht. Alternativ oder ergänzend kann in Abhängigkeit von den Bestätigungsdaten die Ausführung des Prozesses bewirkt oder unterbunden werden. Insbesondere kann der Prozess (automatisch) ausgeführt werden, wenn bestimmt wurde, dass die Bestätigung des Prozesses erfolgreich war. Andererseits kann bewirkt werden, dass der Prozess nicht ausgeführt wird, wenn bestimmt wurde, dass die Bestätigung des Prozesses nicht erfolgreich war.

Durch das Verfahren wird somit in effizienter und komfortabler Weise eine Mehr-Faktor Authentisierung für die Ausführung eines (sicherheitsrelevanten) Prozesses ermöglicht.

Dabei können ein oder mehrere (Smart-Home) Hausgeräte im Rahmen der Authentisierung bzw. Autorisierung des Prozesses eingebunden werden.

Die ein oder mehreren ersten Hausgeräte können jeweils einen Sensor umfassen, mit dem Sensordaten in Bezug auf eine erste Aktion des Nutzers erfasst werden können. Beispielhafte erste Hausgeräte sind: ein Fenster und/oder eine Tür, das bzw. die im Rahmen einer ersten Aktion geöffnet oder geschlossen werden können; einen Heizkörper, an dem im Rahmen einer ersten Aktion eine Temperatur eingestellt werden kann; eine Leuchte, die im Rahmen einer ersten Aktion eingeschaltet oder ausgeschaltet werden kann und/oder deren Farbe im Rahmen einer ersten Aktion eingestellt werden kann; eine Rolllade, die im Rahmen einer ersten Aktion in eine bestimmte Stellung gefahren werden kann; ein Bedienelement, das im Rahmen einer ersten Aktion betätigt werden kann; und/oder eine Benutzerschnittstelle, an der im Rahmen einer ersten Aktion ein oder mehrere Eingaben bewirkt werden können.

Die ein oder mehreren zweiten Hausgeräte können jeweils einen Aktor umfassen, durch den eine zweite Aktion bewirkt werden kann. Beispielhafte zweite Hausgeräte sind: ein Fenster und/oder eine Tür, das bzw. die im Rahmen einer zweiten Aktion geöffnet oder geschlossen werden können; eine Leuchte, die im Rahmen einer zweiten Aktion eingeschaltet oder ausgeschaltet werden kann und/oder deren Farbe im Rahmen einer zweiten Aktion eingestellt werden kann; eine Rolllade, die im Rahmen einer zweiten Aktion in eine bestimmte Stellung gefahren werden kann; und/oder eine Benutzerschnittstelle, an der im Rahmen einer zweiten Aktion ein oder mehrere Ausgaben bewirkt werden können.

Das Verfahren kann umfassen, das Ermitteln von Haushaltsdaten in Bezug auf den Haushalt, in dem sich der Nutzer befindet. Die Haushaltsdaten können z.B. auf einer Datenbank gespeichert sein, die für eine Vielzahl von unterschiedlichen Haushalten für eine entsprechende Vielzahl von Nutzern jeweils Haushaltsdaten umfasst. Die Haushaltsdaten für einen Haushalt können umfassen: Information in Bezug auf die ein oder mehreren ersten Hausgeräte und/oder die ein oder mehreren zweiten Hausgeräte, die in dem Haushalt angeordnet sind; Information in Bezug auf die Positionen der ein oder mehreren ersten Hausgeräte und/oder der ein oder mehreren zweiten Hausgeräte in dem Haushalt; Information in Bezug auf ein oder mehrere mögliche erste Aktionen, die von dem Nutzer an den ein oder mehreren ersten Hausgeräten des Haushalts ausgeführt werden können; und/oder Information in Bezug auf ein oder mehrere mögliche zweite Aktionen, die durch die ein oder mehreren zweiten Hausgeräte des Haushalts ausgeführt werden können.

Es kann somit als Haushaltsdaten ermittelt werden, welche ein oder mehreren Hausgeräte in einem Haushalt zur Verfügung stehen, und welche Aktionen von und/oder an den ein oder mehreren Hausgeräten ausgeführt werden können. Die Aktionsmenge kann dann in zuverlässiger Weise in Abhängigkeit von den Haushaltsdaten ermittelt werden. So kann eine robuste und zuverlässige Bestätigung eines Prozesses bewirkt werden.

Das Verfahren kann umfassen, das Ermitteln von Sicherheitsdaten in Bezug auf eine Sicherheitsanforderung des initiierten Prozesses. Die Aktionsmenge kann dann in Abhängigkeit von den Sicherheitsdaten ermittelt werden. Insbesondere kann die Komplexität der Aktionsmenge in Abhängigkeit von den Sicherheitsdaten angepasst werden, insbesondere derart, dass mit einer steigenden Sicherheitsanforderung des initiierten Prozesses die Komplexität der Aktionsmenge steigt. So kann der Komfort für einen Nutzer weiter erhöht werden. Insbesondere kann so der Bestätigungsaufwand an die Sicherheitsanforderung des jeweils initiierten Prozesses angepasst werden.

Die Komplexität der Aktionsmenge kann von der Anzahl K von unterschiedlichen Aktionen abhängen, die im Rahmen der Aktionsmenge (ggf. sequentiell) auszuführen, abhängen, wobei die Komplexität typischerweise mit steigender Anzahl von Aktionen steigt. Alternativ oder ergänzend kann die Komplexität der Aktionsmenge von der Gesamtzahl N von unterschiedlichen möglichen Aktionen abhängen, die anhand von ein oder mehreren verfügbaren Hausgeräten in dem Haushalt ausgeführt werden können. Beispielsweise können es die verfügbaren Hausgeräte ermöglichen, an einem bestimmten Zeitpunkt eine Aktion aus N unterschiedlichen möglichen Aktionen zu tätigen (z.B. N>1, 5, 10). Die Gesamtkomplexität einer Aktionsmenge mit K Aktionen kann dann K*N sein. Mit steigender Komplexität steigt typischerweise die Sicherheit, mit der bestimmt werden kann, ob eine Bestätigung tatsächlich durch den Nutzer erfolgt ist oder nicht.

Die Aktionsmenge kann ferner die Reihenfolge anzeigen, in der die ein oder mehreren ersten Aktionen und/oder die ein oder mehreren zweiten Aktionen auszuführen sind. Durch das Festlegen einer bestimmten Reihenfolge von Aktionen kann die Sicherheit der Authentisierung und/oder Autorisierung weiter erhöht werden. Alternativ oder ergänzend kann die Aktionsmenge eine maximal zulässige Zeitdauer anzeigen, die dem Nutzer für die Ausführung einer ersten Aktion und/oder für das Bestätigen einer zweiten Aktion zur Verfügung steht. Durch das Festlegen einer maximal zulässigen Zeitdauer für das Bestätigen der einzelnen Aktionen kann die Sicherheit der Authentisierung und/oder Autorisierung weiter erhöht werden.

Gemäß einem weiteren Aspekt der Erfindung wird ein System zur Steuerung der Ausführung eines von einem Nutzer initiierten Prozesses beschrieben. Das System umfasst zumindest eine Zentraleinheit, die eingerichtet ist, eine Aktionsmenge zur Bestätigung des Prozesses zu ermitteln, wobei die Aktionsmenge ein oder mehrere Aktionen anzeigt, die von einem Nutzer jeweils an einem Hausgerät und/oder die durch jeweils ein Hausgerät auszuführen sind. Des Weiteren ist die Zentraleinheit eingerichtet, Bestätigungsdaten in Bezug auf die Aktionsmenge, insbesondere in Bezug darauf, ob die ein oder mehreren Aktionen der Aktionsmenge ausgeführt wurden, zu ermitteln. Ferner ist die Zentraleinheit eingerichtet, in Abhängigkeit von den Bestätigungsdaten zu bewirken, dass der Prozess ausgeführt wird oder nicht.

Das System kann eine erste Zentraleinheit umfassen, die eingerichtet ist, den initiierten Prozess auszuführen (z.B. als Teil einer Banking-Anwendung). Des Weiteren kann das System eine (separate) zweite Zentraleinheit umfassen, die eingerichtet ist, die ein oder mehreren ersten und/oder zweiten Hausgeräte zur Ermittlung der Bestätigungsdaten zu steuern (z.B. als Teil einer Smart-Home-Anwendung). Die erste und die zweite Zentraleinheit können ausgebildet sein, über eine Kommunikationsverbindung Daten in Bezug auf die Bestätigung des initiierten Prozesses auszutauschen. Durch die Bereitstellung von separaten Zentraleinheiten für die Durchführung des Prozesses einerseits und für die Interaktion mit den Hausgeräten andererseits kann das in diesem Dokument beschriebene Bestätigungs- bzw. Autorisierungsverfahren in besonders effizienter und zuverlässiger Weise umgesetzt werden.

Es ist zu beachten, dass jegliche Aspekte des in diesem Dokument beschriebenen Systems und/oder des in diesem Dokument beschriebenen Verfahrens in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
- Figur 1: ein Blockdiagramm eines beispielhaften Systems zur Ausführung eines sicherheitsrelevanten Prozesses; und
- Figur 2: ein Ablaufdiagramm eines beispielhaften Verfahrens zur Ausführung eines sicherheitsrelevanten Prozesses.

Wie eingangs dargelegt, befasst sich das vorliegende Dokument damit, es einem Nutzer zu ermöglichen, in komfortabler und/oder sicherer Weise die Ausführung eines sicherheitsrelevanten Prozesses (z.B. eine Banküberweisung bei Internetbanking und/oder einer Passwortänderung) zu veranlassen. In diesem Zusammenhang kann eine mehrstufige Authentisierungsmethode, insbesondere eine Zwei-Faktor-Authentisierung (2FA), verwendet werden.

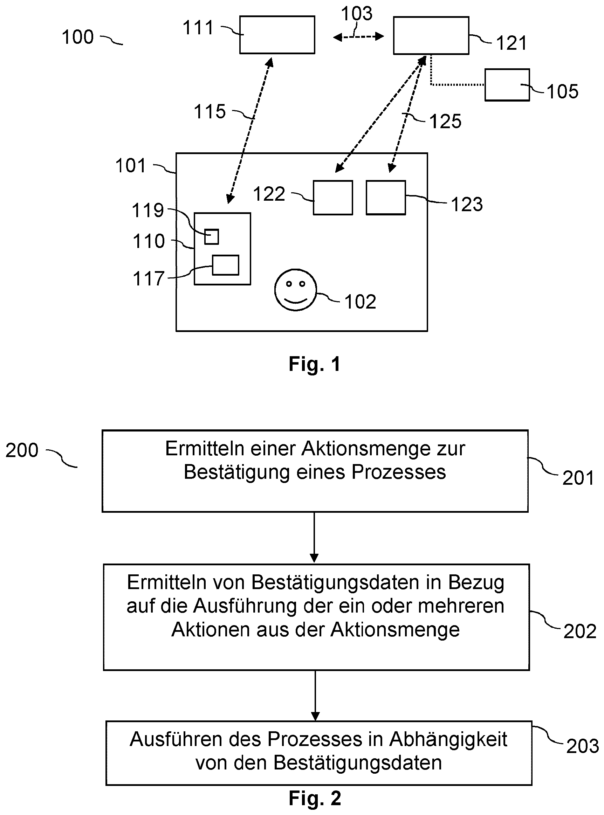

Fig. 1 zeigt ein beispielhaftes System 100, das es einem Nutzer 102 in einem Haushalt 101 ermöglicht, einen sicherheitsrelevanten Prozess zu veranlassen. Der Prozess kann insbesondere über einen ersten Kanal (z.B. mittels einer Computereinheit 110, etwa einem Smartphone oder einem Computer) von dem Nutzer 102 initiiert werden. Die Computereinheit 110 kann eine Benutzerschnittstelle 117 und ein Steuermodul 119 umfassen. Die Initiierung des Prozesses kann z.B. über die Benutzerschnittstelle 117 initiiert werden. Über eine erste Kommunikationsverbindung 115 kann eine erste Zentraleinheit 111 darüber informiert werden, dass der sicherheitsrelevante Prozess ausgeführt werden soll. Mit anderen Worten, es kann an der ersten Zentraleinheit 111 ein sicherheitsrelevanter Prozess initiiert werden.

Die erste Zentraleinheit 111 (z.B. ein (Backend-) Server) kann daraufhin erkennen, dass zur Ausführung des sicherheitsrelevanten Prozesses, eine zusätzliche Bestätigung über einen zweiten Kanal erforderlich ist. Zur Ausführung einer Banküberweisung kann z.B. die Eingabe einer Transaktionsnummer erforderlich sein, und zur Durchführung einer Änderung eines Passwortes kann z.B. die Eingabe eines Bestätigungscodes erforderlich sein. In diesem Dokument wird ein System 100 beschrieben, dass ein oder mehrere Hausgeräte 122, 123 in dem Haushalt 101 des Nutzers 102 dazu nutzen, die zur Ausführung des sicherheitsrelevanten Prozesses erforderliche Bestätigung durch den Nutzer 102 einzuholen.

Das System 100 umfasst ein oder mehrere erste Hausgeräte 122, die als Sensoren verwendet werden können, um Sensordaten in Bezug auf eine durch den Nutzer 102 ausgeführten ersten Aktion zu erfassen. Alternative oder ergänzend umfasst das System ein oder mehrere zweite Hausgeräte 123, die ausgebildet sein, eine zweite Aktion auszuführen, die durch den Nutzer 102 erkannt und an der Benutzerschnittstelle 117 der Computereinheit 110 bestätigt werden kann. Die ein oder mehreren Hausgeräte 122, 123 können von einer zweiten Zentraleinheit 121 veranlasst werden, Sensordaten in Bezug auf eine erste Aktion des Nutzers 102 zu erfassen und/oder eine zweite Aktion auszuführen, die der Nutzer 102 erkennen kann. Die zweite Zentraleinheit 121 kann dabei über eine zweite Kommunikationsverbindung 125 mit den ein oder mehreren Hausgeräten 122, 123 kommunizieren.

Des Weiteren können die erste Zentraleinheit 111 und die zweite Zentraleinheit 121 über eine weitere Kommunikationsverbindung 103 miteinander kommunizieren. Z.B. kann die erste Zentraleinheit 111 der zweiten Zentraleinheit 121 mittteilen, dass zur Bestätigung eines initiierten sicherheitsrelevanten Prozesses Sensordaten durch ein oder mehrere erste Hausgeräte 122 zu erfassen sind und/oder durch ein oder mehrere zweite Hausgeräte 123 eine zweite Aktion auszuführen ist. Des Weiteren kann die zweite Zentraleinheit 121 ausgebildet sein, die von einem ersten Hausgerät 122 erfassten Sensordaten zur Bestätigung an die erste Zentraleinheit 111 weiterzuleiten, und/oder der ersten Zentraleinheit 111 mitzuteilen, dass durch ein zweites Hausgerät 123 eine Aktion ausgeführt wurde.

Zur Bestätigung der Ausführung eines initiierten Prozesses kann z.B. der Nutzer 102 über die Benutzerschnittstelle 117 der Computereinheit 110 veranlasst werden, eine bestimmte erste Aktion (an einem ersten Hausgerät 122) auszuführen, die mittels des ersten Hausgeräts 122 in dem Haushalt 101 des Nutzers 102 erkannt werden kann. Beispielsweise kann der Nutzer 102 aufgefordert werden, die Ofentür eines bestimmten Ofens 122 zu öffnen. Der Nutzer 102 kann daraufhin die gewünschte (erste) Aktion ausführen, und das erste Hausgerät 122 kann eingerichtet sein, Sensordaten in Bezug auf die ausgeführte (erste) Aktion zu erfassen und an die zweite Zentraleinheit 121 zu senden. Die zweite Zentraleinheit 121 kann daraufhin die erste Zentraleinheit 111 informieren, dass eine erfolgreiche Ausführung der ersten Aktion erfolgt ist.

In einem weiteren Beispiel kann zur Bestätigung der Ausführung eines initiierten Prozesses von einen zweiten Hausgerät 123 eine bestimmte (zweite) Aktion ausgeführt werden, die von dem Nutzer 102 erkannt werden kann. Der Nutzer 102 kann daraufhin über die Benutzerschnittstelle 117 der Computereinheit 110 eine Rückmeldung in Bezug auf die erkannte (zweite) Aktion geben, um damit die erfolgreiche Ausführung der zweiten Aktion bestätigen.

Es können somit Geräte 122, 123 in einem Smart Home 101, beispielsweise Haushaltsgeräte, als zweiter Faktor zur Bestätigung einer Nutzeraktion direkt im Haushalt 101 eines Nutzers 102 verwendet werden. Beispielsweise kann der Nutzer 102 einer Banking-Anwendung (statt Verwendung einer einmalig verwendbaren Transaktionsnummer) aufgefordert werden, eine bestimmte Aktion in seinem Smart Home 101 auszuführen. Beispielhaft kann der Nutzer 102 aufgefordert werden, ein bestimmtes, genau bezeichnetes Fenster 122 zu öffnen oder einen geeigneten Bestätigungsdialog an einem Ofen 122 mit grafischer LCD-Anzeige zu bestätigen. Innerhalb eines Smart Home 101 können ein oder mehrere Sensoren und/oder Aktoren von Geräten 122, 123 zur Identifikation verwendet werden.

Ein Sensor eines Geräts 122, 123 in einem Smart Home 101 kann eingerichtet sein, infolge einer (ersten) Aktion eines Nutzers 102 einen Messwert zu ändern und diese Änderung des Messwerts (als Sensordaten) auf einem gesicherten Kommunikationsweg 125 an die anfragende Zentraleinheit 111, 121 zu übertragen. Als Messwert können auch relativ einfache binäre Werte (wie z.B. "Schalter gedrückt") betrachtet werden. Durch die Verwendung eines Sensors eines Geräts 122, 123 zur Erkennung einer (ersten) Aktion eines Nutzers 102 können alle erforderlichen Schutzziele der Informationssicherheit, insbesondere Vertraulichkeit, Integrität und Verfügbarkeit, gewährleistet werden.

Beispielsweise kann der Nutzer 102 aufgefordert werden:
- ein bestimmtes, genau bezeichnetes Fenster 122 in dem Haushalt 101 zu öffnen;
- eine bestimmte Heizung 122 auf eine bestimmte Temperatur einzustellen;
- eine Lampe 122 in einem bestimmten Zimmer ein- oder auszuschalten;
- eine bestimmte Rolllade 122 auf eine bestimmte Höhe zu fahren und/oder eine bestimmte Rolllade 122 zu betätigen;
- an einem bestimmten Smart-Home-Gerät 122 einen Knopf zu drücken und/oder ein Drehrad zu betätigen;
- die Ofen- oder Kühlschranktür zu öffnen oder zu schließen; und/oder
- auf einer Home-Appliance 122 den Anweisungen auf der Anzeige einer Benutzerschnittstelle der Appliance 122 zu folgen.

Ein Hausgerät 123 kann alternativ oder ergänzend als Aktor verwendet werden. Insbesondere kann ein Hausgerät 123 von einer Zentraleinheit 111, 121 aus über die Kommunikationsverbindung 125 (fern-) gesteuert werden. Sobald eine Autorisierung ansteht, kann die Zentraleinheit 111, 121 ein oder mehrere Geräte 123 in dem Haushalt 101 des Nutzers 102 steuern, z.B. um zu überprüfen, ob sich der Nutzer tatsächlich in dem Haushalt 101 verbindet und/oder ob die ein oder mehrere Geräte 123 über eine Kommunikationsverbindung 125 (z.B. dem Internet) mit der Zentraleinheit 111, 121 verbunden sind.

Beispielsweise kann als (zweite) Aktion an einem Hausgerät 123 veranlasst werden:
- eine bestimmte RGB-Lampe 123 auf eine bestimmte Farbe zu setzen;
- eine bestimmte Lampe 123 mit einem bestimmten Blinkmuster blinken zu lassen;
- eine Rolllade auf eine bestimmte Höhe zu fahren; und/oder
- eine Nachricht (z.B. Text, Grafik, Audio, Haptik) auf einer geeigneten Appliance 123 (z.B. einem Smart-Kühlschrank mit einem großen Display) ausgeben.

Der Nutzer 102 kann die Autorisierung dadurch durchführen, dass der Nutzer 102 eine Rückmeldung in Bezug auf die von einem Hausgerät 123 bewirkten (zweiten) Aktion gibt, z.B. durch freie Eingabe an der Benutzerschnittschnittstelle 117 der Computereinheit 110 und/oder durch Auswahl einer Aktion aus einer angezeigten List von möglichen Aktionen. Beispielsweise kann der Nutzer 102 ausgefordert werden, zu bestätigen, in welchem Zimmer Licht eingeschaltet wurde. Der Nutzer 102 kann dann über die Benutzerschnittstelle 117 der Computereinheit 110 das Zimmer angeben, in dem das Licht eingeschaltet wurde, um die Ausführung des Prozesses zu bestätigen. Daraufhin kann dann der Prozess ausgeführt werden.

Die Anzahl und/oder der Typ von Aktionen, die für eine Bestätigung verwendet werden, können variieren. Ggf. können mehrere Aktionen in Kombination (d.h. eine Aktionsmenge) verwendet werden, um eine Bestätigung durchzuführen. Zur Erhöhung der Sicherheit kann die Gültigkeit der einzelnen Aktionen einer Aktionsmenge zeitlich begrenzt sein. Insbesondere kann die Zeitdauer begrenzt sein, innerhalb der eine erste Aktion von dem Nutzer 102 ausgeführt wird und/oder innerhalb der eine zweite Aktion von dem Nutzer 102 bestätigt wird.

Die Computereinheit 110 kann ggf. eingerichtet sein, direkt mit einem Hausgerät 122, 123 zu kommunizieren (z.B. mittels Bluetooth Low Energy), um eine (zweite) Aktion eines Hausgeräts 123 zu veranlassen, und/oder um von einem Hausgerät 122 Sensordaten in Bezug auf eine (erste) Aktion des Nutzers 102 zu erhalten. So kann jedoch typischerweise nur eine relativ geringe Informationssicherheit ermöglicht werden.

In einem bevorzugten System 100 erfolgt die Kommunikation zu den ein oder mehreren Hausgeräten 122, 123 über eine zweite Zentraleinheit 121, die eingerichtet ist, auf eine Datenbank 105 zuzugreifen, wobei die Datenbank Haushaltsdaten für eine Vielzahl von unterschiedlichen Haushalten 101 umfasst. Die Haushaltsdaten für einen Haushalt 101 können umfassen,
- Information in Bezug auf die in dem Haushalt 101 verfügbaren ein oder mehreren Hausgeräte 122, 123;
- Information in Bezug auf Attribute und/oder Fähigkeiten der einzelnen Hausgeräte 122, 123; und/oder
- Information in Bezug auf die Anordnung der einzelnen Hausgeräte 122, 123 in dem Haushalt 101.

Von der zweiten Zentraleinheit 121 kann für einen zu autorisierenden Prozess ein Algorithmus ausgewählt werden, der eine Aktionsmenge bzw. eine Aktions-Kombination für den zu autorisierenden Prozess ermittelt. Die ein oder mehreren Hausgeräte 122, 123 können dann in Abhängigkeit von der Aktionsmenge betrieben werden, um eine Bestätigung durch den Nutzer 102 einzuholen. Die Komplexität der Aktionsmenge (insbesondere der Aktions-Kombination) kann dabei von der erforderlichen Sicherheit der Bestätigung abhängen. Beispielsweise kann die Komplexität der Aktionsmenge mit steigendem Betrag einer zu tätigenden Überweisung ansteigen.

Die zweite Zentraleinheit 121 kann über eine sichere Kommunikationsverbindung 103 (z.B. über OAUTH2) mit der ersten Zentraleinheit 111 kommunizieren, um es der ersten Zentraleinheit 111 zu ermöglichen, der zweiten Zentraleinheit 121 mitzuteilen, dass eine Bestätigung durch einen Nutzer 102 benötigt wird und/oder um der zweiten Zentraleinheit 121 zu ermöglichen, eine Rückmeldung in Bezug auf die Bestätigung zu geben.

Beispielsweise kann die erste Zentraleinheit 111 eingerichtet sein, auf Basis der Haushaltsdaten in Bezug auf den Haushalt 101 des Nutzers 102 eine Aktionsmenge für eine Bestätigung zusammenzustellen. Die zweite Zentraleinheit 121 kann dann aufgefordert werden, die ein oder mehrere Hausgeräte 122, 123 des Haushalts 101 in Abhängigkeit von der Aktionsmenge zu betreiben. Insbesondere können ein oder mehrere Hausgeräte 122 veranlasst werden, jeweils Sensordaten in Bezug auf ein oder mehrere (erste) Aktion des Nutzers 102 zu erfassen. Die zweite Zentraleinheit 121 kann die erste Zentraleinheit 111 über die erfolgten ein oder mehreren (ersten) Aktionen informieren. Alternativ oder ergänzend kann die zweite Zentraleinheit 121 die erste Zentraleinheit 111 darüber informieren, dass ein oder mehrere Hausgeräte 123 jeweils eine bestimmte (zweite) Aktion ausgeführt haben. Diese Daten werden in diesem Dokument auch als Bestätigungsdaten bezeichnet.

Es kann dann von der ersten Zentraleinheit 111 überprüft werden, ob die Aktionsmenge korrekt von dem Nutzer 102 durchgeführt und/oder bestätigt wurde, und ob dadurch eine Bestätigung des initiierten Prozesses erfolgt ist.

In einem konkreten Beispiel kann durch die erste Zentraleinheit 111 anhand der Haushaltsdaten eine geeignete Aktionssequenz (d.h. eine Aktions-Kombination oder eine Aktionsmenge) zusammengestellt werden. Die Aktionssequenz kann (z.B. über Cloud-2-Cloud im Kontext des Nutzers 102) an die zweite Zentraleinheit 121 übermittelt werden. Die zweite Zentraleinheit 121 kann dann die Aktionssequenz umsetzen. Dabei kann ggf. direkt in Reaktion auf eine Aktion eine Bestätigung an die erste Zentraleinheit 111 gesendet werden. Wenn eine (erste) Aktion (bzw. Challenge) eine Zustandsänderung umfasst, die durch den Nutzer 102 im Smart Home 101 zu bewirken ist, so meldet die zweite Zentraleinheit 121 alle Ereignisse, die sich in einem bestimmten Zeitraum nach dem Start der Challenge ergeben haben und/oder erfasst wurden, an die erste Zentraleinheit 111. Die erste Zentraleinheit 111 kann dann entscheiden, ob die korrekte Sequenz von Aktionen durch den Nutzer 102 ausgeführt wurde. Enthielt die Aktionssequenz ein oder mehrere (zweite) Aktionen, bei denen eine Rückmeldung an der Computereinheit 110 des Nutzers 102 gegeben werden kann, so kann die Rückmeldung direkt von der Computereinheit 110 an die erste Zentraleinheit 111 übermittelt werden. Dabei hat die Computereinheit 110 bevorzugt keine Information darüber, welche Rückmeldung für eine bestimmte (zweite) Aktion bzw. Challenge korrekt ist. Wenn eine Aktionssequenz im Gesamten vollständig und richtig von dem Nutzer 102 bestätigt wurde, so kann der zu autorisierende Prozess von der ersten Zentraleinheit 111 ausgeführt werden. Die für eine Bestätigung verwendete Aktionssequenz kann an den zu autorisierenden Prozess und/oder an die verfügbaren Hausgeräte 122, 123 in einem Haushalt 101 angepasst werden.

Alternativ oder ergänzend kann die Aktionssequenz durch die zweite Zentraleinheit 121 zusammengestellt werden (in Abhängigkeit von Anforderungen der ersten Zentraleinheit 111). Die Haushaltsdaten müssen somit nicht an die erste Zentraleinheit 111 kommuniziert werden. Beispielsweise kann die erste Zentraleinheit 111 der zweiten Zentraleinheit 121 die erforderliche Komplexität einer Aktionssequenz mitteilen und die zweite Zentraleinheit 121 kann daraufhin eine geeignete Aktionssequenz mit der gewünschten Komplexität für einen bestimmten Haushalt 101 erstellen. Des Weiteren kann die zweite Zentraleinheit 121 die korrekte Ausführung der Aktionssequenz überwachen. Durch eine zeitliche Begrenzung der Umsetzung einer Aktionssequenz kann die Sicherheit erhöht werden.

Fig. 2 zeigt ein Ablaufdiagramm eines beispielhaften Verfahrens 200 zur Bestätigung eines durch einen Nutzer 102 initiierten (sicherheitsrelevanten) Prozesses. Das Verfahren 200 kann durch ein oder mehrere Zentraleinheiten 111, 121 (insbesondere Server) ausgeführt werden. Das Verfahren 200 kann darauf ausgelegt sein, einen Faktor für eine Mehr-Faktor Authentisierung bereitzustellen (z.B. als Alternative zu einer Transaktionsnummer, TAN).

Das Verfahren 200 umfasst, das Ermitteln 201 einer Aktionsmenge (insbesondere einer Aktionssequenz oder eine Aktions-Kombination) zur Bestätigung des Prozesses. Dabei kann die Aktionsmenge ein oder mehrere erste Aktionen anzeigen, die durch den Nutzer 102 an zumindest einem ersten Hausgerät 122 in dem Haushalt 101, in dem sich der Nutzer 102 befindet, auszuführen sind. Alternativ oder ergänzend kann die Aktionsmenge ein oder mehrere zweite Aktionen anzeigen, die von zumindest einem zweiten Hausgerät 123 in dem Haushalt 101, in dem sich der Nutzer 102 befindet, auszuführen sind, und deren Ausführung durch den Nutzer 102 jeweils zu bestätigen ist. Die Aktionsmenge kann in Abhängigkeit von Haushaltsdaten aus einer Datenbank 105 ermittelt werden, die anzeigen, welche Typen von Hausgeräten 122, 123 in dem Haushalt 101 des Nutzers 102 zur Verfügung stehen.

Das Verfahren 200 umfasst ferner das Ermitteln 202 von Bestätigungsdaten in Bezug auf die Aktionsmenge. Dabei zeigen die Bestätigungsdaten an, ob die ein oder mehreren ersten Aktionen durch den Nutzer tatsächlich ausgeführt wurden oder nicht. Alternativ oder ergänzend zeigen die Bestätigungsdaten an, ob die ein oder mehreren zweiten Aktionen tatsächlich und/oder korrekt durch den Nutzer bestätigt wurden oder nicht. Es kann dann auf Basis der Bestätigungsdaten bestimmt werden (Schritt 203), ob die Bestätigung des Prozesses erfolgreich war oder nicht. Alternativ oder ergänzend kann in Abhängigkeit von den Bestätigungsdaten bewirkt werden, dass der Prozess ausgeführt oder unterbunden wird.

Durch die in diesem Dokument beschriebenen Maßnahmen kann es einem Nutzer 102 ermöglicht werden, in sicherer und komfortabler Weise die Ausführung eines sicherheitsrelevanten Prozesses zu bestätigen. Dabei kann die Sicherheit insbesondere dadurch erhöht werden, dass die physische Präsenz des Nutzers 102 in einem bestimmten Haushalt 101 bestätigt wird. Dies kann durch eine lokale Interaktion an zumindest einem Gerät 122, 123 in dem Haushalt 101 bewirkt werden.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Systems und/oder des vorgeschlagenen Verfahrens veranschaulichen sollen.

## Patentansprüche

1. Verfahren (200) zur Bestätigung eines durch einen Nutzer (102) initiierten Prozesses; wobei das Verfahren (200) umfasst:
- Ermitteln einer Eingabe des Nutzers (102) in Bezug auf ein Initiieren des Prozesses über einen ersten Kanal;
- Bestimmen, dass die Ausführung des Prozesses eine Bestätigung durch den Nutzer (102) über einen separaten zweiten Kanal erfordert;
- Ermitteln (201) einer Aktionsmenge zur Bestätigung des Prozesses; wobei die Aktionsmenge ein oder mehrere erste Aktionen anzeigt, die durch den Nutzer (102) an zumindest einem ersten Hausgerät (122) in einem Haushalt (101), in dem sich der Nutzer (102) befindet, auszuführen sind;
- Ermitteln (202) von Bestätigungsdaten in Bezug auf die Aktionsmenge; wobei die Bestätigungsdaten anzeigen, ob die ein oder mehreren ersten Aktionen durch den Nutzer ausgeführt wurden; und
- Bestimmen (203) auf Basis der Bestätigungsdaten, ob die Bestätigung des Prozesses erfolgreich war oder nicht;
wobei
- die besagte Eingabe des Nutzers (102) an einer Computereinheit, insbesondere an einem Smartphone oder einem Computer, erfasst wird;
- der Prozess einen Prozess in Zusammenhang mit Internetbanking und/oder einen Prozess bei Festlegung eines Passwortes umfasst; und umfassend die weiteren Schritte
- Ermitteln von Haushaltsdaten in Bezug auf den Haushalt (101), in dem sich der Nutzer (102) befindet;
- Ermitteln der Aktionsmenge in Abhängigkeit von den Haushaltsdaten;
- wobei die derartig ermittelte Aktionsmenge zusätzlich ein oder mehrere zweite Aktionen anzeigt, die von zumindest einem zweiten Hausgerät (123) in dem Haushalt (101), in dem sich der Nutzer (102) befindet, auszuführen sind, und deren Ausführung durch den Nutzer (102) zu bestätigen ist, und die Bestätigungsdaten anzeigen, ob die ein oder mehreren zweiten Aktionen durch den Nutzer bestätigt wurden, wobei der zweite Kanal die ein oder mehrere ersten und/oder zweiten Hausgeräte (122, 123) umfasst.

2. Verfahren (200) gemäß Anspruch 1, wobei die Haushaltsdaten umfassen,
- Information in Bezug auf die ein oder mehreren ersten Hausgeräte (122) und/oder die ein oder mehreren zweiten Hausgeräte (123), die in dem Haushalt (101) angeordnet sind;
- Information in Bezug auf eine Position der ein oder mehreren ersten Hausgeräte (122) und/oder der ein oder mehreren zweiten Hausgeräte (123) in dem Haushalt (101);
- Information in Bezug auf ein oder mehrere mögliche erste Aktionen, die von dem Nutzer (102) an den ein oder mehreren ersten Hausgeräten (122) des Haushalts (101) ausgeführt werden können; und/oder
- Information in Bezug auf ein oder mehrere mögliche zweite Aktionen, die durch die ein oder mehreren zweiten Hausgeräte (123) des Haushalts (101) ausgeführt werden können.

3. Verfahren (200) gemäß einem der vorhergehenden Ansprüche, wobei das Verfahren (200) umfasst,
- Ermitteln von Sicherheitsdaten in Bezug auf eine Sicherheitsanforderung des initiierten Prozesses; und
- Ermitteln der Aktionsmenge in Abhängigkeit von den Sicherheitsdaten.

4. Verfahren (200) gemäß Anspruch 3, wobei eine Komplexität der Aktionsmenge in Abhängigkeit von den Sicherheitsdaten derart angepasst wird, dass mit einer steigenden Sicherheitsanforderung des initiierten Prozesses die Komplexität der Aktionsmenge steigt.

5. Verfahren (200) gemäß Anspruch 4, wobei die Komplexität der Aktionsmenge abhängt von
- einer Anzahl von unterschiedlichen Aktionen, die im Rahmen der Aktionsmenge auszuführen sind; und/oder
- einer Gesamtzahl von unterschiedlichen möglichen Aktionen, die anhand von ein oder mehreren verfügbaren Hausgeräten (122, 123) in dem Haushalt (101) ausgeführt werden können.

6. Verfahren (200) gemäß einem der vorhergehenden Ansprüche, wobei die Aktionsmenge anzeigt,
- eine Reihenfolge, in der die ein oder mehreren ersten Aktionen und/oder die ein oder mehreren zweiten Aktionen auszuführen sind; und/oder
- eine maximal zulässige Zeitdauer, die dem Nutzer (102) für die Ausführung einer ersten Aktion und/oder für das Bestätigen einer zweiten Aktion zur Verfügung steht.

7. Verfahren (200) gemäß einem der vorhergehenden Ansprüche, wobei
- eine Ausführung des initiierten Prozesses eine Mehr-Faktor Authentisierung erfordert; und/oder
- die Bestätigung des Prozesses auf Basis der Bestätigungsdaten ein Faktor einer Mehr-Faktor Authentisierung zur Ausführung des initiierten Prozesses ist.

8. Verfahren (200) gemäß einem der vorhergehenden Ansprüche, wobei
- das Verfahren (200) umfasst, Bewirken, dass von dem Nutzer (102) eine in der Aktionsmenge spezifizierte erste Aktion an einem ersten Hausgerät (122) ausgeführt wird;
- das Verfahren (200) umfasst, Ermitteln von Sensordaten in Bezug auf die erste Aktion, die von dem Nutzer (102) an dem ersten Hausgerät (122) ausgeführt wird oder wurde, mittels eines Sensors des ersten Hausgeräts (122); und
- die Bestätigungsdaten die Sensordaten umfassen.

9. Verfahren (200) gemäß einem der vorhergehenden Ansprüche, wobei
- das Verfahren (200) umfasst, Bewirken, dass von einem zweiten Hausgerät (123) eine in der Aktionsmenge spezifizierte zweite Aktion ausgeführt wird;
- das Verfahren (200) umfasst, Ermitteln von Eingabedaten des Nutzers (102) in Bezug auf die zweite Aktion an einer Benutzerschnittstelle (117) einer Computereinheit (110) und/oder an einer Benutzerschnittstelle eines Hausgeräts (122, 123) des Haushalts (101); und
- die Bestätigungsdaten die Eingabedaten umfassen.

10. Verfahren (200) gemäß einem der vorhergehenden Ansprüche, wobei das Verfahren (200) umfasst,
- Ausführen des Prozesses, wenn bestimmt wurde, dass die Bestätigung des Prozesses erfolgreich war; und/oder
- Bewirken, dass der Prozess nicht ausgeführt wird, wenn bestimmt wurde, dass die Bestätigung des Prozesses nicht erfolgreich war.

11. Verfahren (200) gemäß einem der vorhergehenden Ansprüche, wobei
- die ein oder mehreren ersten Hausgeräte (122) jeweils einen Sensor umfassen, mit dem Sensordaten in Bezug auf eine erste Aktion des Nutzers (102) erfasst werden können; und/oder
- die ein oder mehreren ersten Hausgeräte (122) umfassen:
- ein Fenster und/oder eine Tür, das bzw. die im Rahmen einer ersten Aktion geöffnet oder geschlossen werden können;
- einen Heizkörper, an dem im Rahmen einer ersten Aktion eine Temperatur eingestellt werden kann;
- eine Leuchte, die im Rahmen einer ersten Aktion eingeschaltet oder ausgeschaltet werden kann und/oder deren Farbe im Rahmen einer ersten Aktion eingestellt werden kann;
- eine Rolllade, die im Rahmen einer ersten Aktion in eine bestimmte Stellung gefahren werden kann;
- ein Bedienelement, das im Rahmen einer ersten Aktion betätigt werden kann; und/oder
- eine Benutzerschnittstelle, an der im Rahmen einer ersten Aktion ein oder mehrere Eingaben bewirkt werden können; und/oder
- die ein oder mehreren zweiten Hausgeräte (123) jeweils einen Aktor umfassen, durch den eine zweite Aktion bewirkt werden kann; und/oder
- die ein oder mehreren zweiten Hausgeräte (123) umfassen:
- ein Fenster und/oder eine Tür, das bzw. die im Rahmen einer zweiten Aktion geöffnet oder geschlossen werden können;
- eine Leuchte, die im Rahmen einer zweiten Aktion eingeschaltet oder ausgeschaltet werden kann und/oder deren Farbe im Rahmen einer zweiten Aktion eingestellt werden kann;
- eine Rolllade, die im Rahmen einer zweiten Aktion in eine bestimmte Stellung gefahren werden kann; und/oder
- eine Benutzerschnittstelle, an der im Rahmen einer zweiten Aktion ein oder mehrere Ausgaben bewirkt werden können.

12. System (100) zur Steuerung der Ausführung eines von einem Nutzer (102) initiierten Prozesses; wobei das System (100)
- eine Computereinheit, insbesondere ein Smartphone oder einen Computer,
- zumindest ein erstes Hausgerät,
- zumindest ein zweites Hausgerät und zumindest eine Zentraleinheit (111, 121) umfasst, die eingerichtet ist,
- eine Eingabe des Nutzers (102) in Bezug auf ein Initiieren des Prozesses über einen ersten Kanal zu ermitteln;
- zu bestimmen, dass die Ausführung des Prozesses eine Bestätigung durch den Nutzer (102) über einen separaten zweiten Kanal erfordert;
- eine Aktionsmenge zur Bestätigung des Prozesses zu ermitteln; wobei die Aktionsmenge ein oder mehrere erste Aktionen anzeigt, die durch den Nutzer (102) an dem zumindest einen ersten Hausgerät (122) in einem Haushalt (101), in dem sich der Nutzer (102) befindet, auszuführen sind;
- Bestätigungsdaten in Bezug auf die Aktionsmenge zu ermitteln; wobei die Bestätigungsdaten anzeigen, ob die ein oder mehreren ersten Aktionen durch den Nutzer ausgeführt wurden; und
- in Abhängigkeit von den Bestätigungsdaten zu bewirken, dass der Prozess ausgeführt wird oder nicht;
wobei
- die Computereinheit dafür eingerichtet ist, die besagte Eingabe des Nutzers zu erfassen;
- der Prozess einen Prozess in Zusammenhang mit Internetbanking und/oder einen Prozess bei Festlegung eines Passwortes umfasst; und die Zentraleinheit (111, 121) weiterhin dafür eingerichtet ist,
- Haushaltsdaten in Bezug auf den Haushalt (101) zu ermitteln, in dem sich der Nutzer (102) befindet; und
- die Aktionsmenge in Abhängigkeit von den Haushaltsdaten zu ermitteln;
- wobei die ermittelte Aktionsmenge zusätzlich ein oder mehrere zweite Aktionen anzeigt, die von dem zumindest einen zweiten Hausgerät (123) in dem Haushalt (101), in dem sich der Nutzer (102) befindet, auszuführen sind, und deren Ausführung durch den Nutzer (102) zu bestätigen ist, und
- wobei die Bestätigungsdaten anzeigen, ob die ein oder mehreren zweiten Aktionen durch den Nutzer bestätigt wurden, wobei der zweite Kanal die ein oder mehreren ersten und/oder zweiten Hausgeräte (122, 123) umfasst.

13. System (100) gemäß Anspruch 12; wobei
- das System (100) eine erste Zentraleinheit (111) umfasst, die eingerichtet ist, den initiierten Prozess auszuführen;
- das System (100) eine zweite Zentraleinheit (121) umfasst, die eingerichtet ist, die ein oder mehreren ersten und/oder zweiten Hausgeräte (122, 123) zur Ermittlung der Bestätigungsdaten zu steuern; und
- die erste und die zweite Zentraleinheit (111, 121) ausgebildet sind, über eine Kommunikationsverbindung (103) Daten in Bezug auf die Bestätigung des initiierten Prozesses auszutauschen.

## Claims

1. Method (200) for confirming a process initiated by a user (102), wherein the method (200) comprises:
- ascertaining an input of the user (102) relating to an initiation of the process via a first channel;
- determining that the performance of the process requires a confirmation by the user (102) via a separate second channel;
- ascertaining (201) an action set for confirming the process; wherein the action set indicates one or more first actions which are to be performed by the user (102) on at least one first household appliance (122) in a household (101) in which the user (102) is located;
- ascertaining (202) confirmation data relating to the action set; wherein the confirmation data indicates whether the one or more first actions were performed by the user; and
- determining (203), on the basis of the confirmation data, whether or not the confirmation of the process was successful;
wherein
- said input of the user (102) is captured on a computer unit, in particular on a smartphone or a computer;
- the process comprises a process in connection with Internet banking and/or a process when establishing a password;
and comprising the further steps
- ascertaining household data relating to the household (101) in which the user (102) is located;
- ascertaining the action set as a function of the household data;
- wherein the action set ascertained in such a manner additionally indicates one or more second actions, which are to be performed by at least one second household appliance (123) in the household (101) in which the user (102) is located, and the performance of which by the user (102) is to be confirmed, and the confirmation data indicates whether the one or more second actions were confirmed by the user, wherein the second channel comprises the one or more first and/or second household appliances (122, 123).

2. Method (200) according to claim 1, wherein the household data comprises
- information relating to the one or more first household appliances (122) and/or the one or more second household appliances (123), which are arranged in the household (101);
- information relating to a position of the one or more first household appliances (122) and/or the one or more second household appliances (123) in the household (101);
- information relating to one or more possible first actions, which can be performed by the user (102) on the one or more first household appliances (122) of the household (101); and/or
- information relating to one or more possible second actions, which can be performed by the one or more second household appliances (123) of the household (101).

3. Method (200) according to one of the preceding claims, wherein the method (200) comprises
- ascertaining security data relating to a security requirement of the initiated process; and
- ascertaining the action set as a function of the security data.

4. Method (200) according to claim 3, wherein a complexity of the action set is adapted as a function of the security data in such a manner that the complexity of the action set increases as a security requirement of the initiated process increases.

5. Method (200) according to claim 4, wherein the complexity of the action set depends upon
- a number of different actions which are to be performed as part of the action set; and/or
- a total number of different possible actions which can be performed on the basis of one or more available household appliances (122, 123) in the household (101).

6. Method (200) according to one of the preceding claims, wherein the action set indicates
- an order in which the one or more first actions and/or the one or more second actions are to be performed; and/or
- a maximum permissible time duration which is available to the user (102) for the performance of a first action and/or for the confirmation of a second action.

7. Method (200) according to one of the preceding claims, wherein
- a performance of the initiated process requires a multi-factor authentication; and/or
- the confirmation of the process on the basis of the confirmation data is one factor of a multi-factor authentication for performing the initiated process.

8. Method (200) according to one of the preceding claims, wherein
- the method (200) comprises causing a first action specified in the action set to be performed on a first household appliance (122) by the user (102);
- the method (200) comprises ascertaining sensor data relating to the first action, which is or was performed on the first household appliance (122) by the user (102), by means of a sensor of the first household appliance (122); and
- the confirmation data comprises the sensor data.

9. Method (200) according to one of the preceding claims, wherein
- the method (200) comprises causing a second action specified in the action set to be performed by a second household appliance (123);
- the method (200) comprises ascertaining input data of the user (102) relating to the second action on a user interface (117) of a computer unit (110) and/or on a user interface of a household appliance (122, 123) of the household (101); and
- the confirmation data comprises the input data.

10. Method (200) according to one of the preceding claims, wherein the method (200) comprises
- performing the process, if it was determined that the confirmation of the process was successful; and/or
- causing the process to not be performed, if it was determined that the confirmation of the process was not successful.

11. Method (200) according to one of the preceding claims, wherein
- the one or more first household appliances (122) each comprise a sensor, with which sensor data relating to a first action of the user (102) can be captured; and/or
- the one or more first household appliances (122) comprise:
- a window and/or a door, which can be opened or closed as part of a first action;
- a heating element, on which a temperature can be set as part of a first action;
- a light, which can be switched on or off as part of a first action and/or the colour of which can be set as part of a first action;
- a shutter, which can be moved to a particular position as part of a first action;
- an operating element, which can be actuated as part of a first action; and/or
- a user interface, on which one or more inputs can be caused as part of a first action; and/or
- the one or more second household appliances (123) each comprise an actuator, by way of which a second action can be caused; and/or
- the one or more second household appliances (123) comprise:
- a window and/or a door, which can be opened or closed as part of a second action;
- a light, which can be switched on or off as part of a second action and/or the colour of which can be set as part of a second action;
- a shutter, which can be moved to a particular position as part of a second action;
- a user interface, on which one or more outputs can be caused as part of a second action.

12. System (100) for controlling the performance of a process initiated by a user (102);
wherein the system (100) comprises
- a computer unit, in particular a smartphone or a computer,
- at least one first household appliance,
- at least one second household appliance and
at least one central unit (111, 121), which is configured
- to ascertain an input of the user (102) relating to an initiation of the process via a first channel;
- to determine that the performance of the process requires a confirmation by the user (102) via a separate second channel;
- to ascertain an action set for confirming the process; wherein the action set indicates one or more first actions which are to be performed by the user (102) on the at least one first household appliance (122) in a household (101) in which the user (102) is located;
- to ascertain confirmation data relating to the action set; wherein the confirmation data indicates whether the one or more first actions were performed by the user; and
- to cause the process to be performed, or not to be performed, as a function of the confirmation data;
wherein
- the computer unit is configured to capture said input of the user;
- the process comprises a process in connection with Internet banking and/or a process when establishing a password; and
the central unit (111, 121) is furthermore configured
- to ascertain household data relating to the household (101) in which the user (102) is located; and
- to ascertain the action set as a function of the household data;
- wherein the ascertained action set additionally indicates one or more second actions, which are to be performed by the at least one second household appliance (123) in the household (101) in which the user (102) is located, and the performance of which by the user (102) is to be confirmed, and
- wherein the confirmation data indicates whether the one or more second actions were confirmed by the user, wherein the second channel comprises the one or more first and/or second household appliances (122, 123).

13. System (100) according to claim 12; wherein
- the system (100) comprises a first central unit (111), which is configured to perform the initiated process;
- the system (100) comprises a second central unit (121), which is configured to control the one or more first and/or second household appliances (122, 123) for ascertaining the confirmation data; and
- the first and the second control unit (111, 121) are embodied to exchange data relating to the confirmation of the initiated process via a communication connection (103).

## Revendications

1. Procédé (200) de confirmation d'un processus initié par un utilisateur (102), le procédé (200) comprenant :
- la détermination d'une entrée de l'utilisateur (102) concernant une initiation du processus sur un premier canal,
- la détermination que l'exécution du processus requiert une confirmation par l'utilisateur (102) via un deuxième canal distinct,
- la détermination (201) d'un ensemble d'actions destiné à confirmer le processus, l'ensemble d'actions indiquant une ou plusieurs premières actions, qui sont à exécuter par l'utilisateur (102) sur au moins un premier appareil domestique (122) dans une habitation (101), dans laquelle l'utilisateur (102) se trouve,
- la détermination (202) de données de confirmation associées à l'ensemble d'actions, les données de confirmation indiquant si une ou plusieurs premières actions ont été exécutées par l'utilisateur, et
- la détermination (203), sur la base de données de confirmation, si la confirmation du processus a réussi ou non,
- dans lequel
- ladite entrée de l'utilisateur (102) est effectuée au moyen d'une unité informatique, en particulier un smartphone ou un ordinateur,
- le processus comprend un processus associé à des services bancaires en ligne et/ou un processus de définition de mot de passe,
- le procédé comprenant les étapes supplémentaires suivantes :
- la détermination de données d'habitation relatives à l'habitation (101), dans laquelle l'utilisateur (102) se trouve,
- la détermination de l'ensemble d'actions en fonction des données d'habitation,
- dans lequel l'ensemble d'actions déterminé ainsi indique en outre une ou plusieurs deuxièmes actions, qui sont à exécuter par au moins un deuxième appareil domestique (123) dans l'habitation (101) dans laquelle se trouve l'utilisateur (102), et dont l'exécution doit être confirmée par l'utilisateur (102), et les données de confirmation indiquent si l'une ou plusieurs deuxièmes actions ont été confirmées par l'utilisateur (102), dans lequel le deuxième canal comprend un ou plusieurs premiers et/ou deuxièmes appareils domestiques (122, 123).

2. Procédé (200) selon la revendication 1, dans lequel les données d'habitation comprennent :
- des informations concernant les un ou plusieurs premiers appareils domestiques (122) et/ou les un ou plusieurs deuxièmes appareils domestiques (123), qui sont disposés dans l'habitation (101),
- des informations concernant une position des un ou plusieurs premiers appareils domestiques (122) et/ou des un ou plusieurs deuxièmes appareils domestiques (123) dans l'habitation (101),
- des informations concernant une ou plusieurs premières actions possibles pouvant être exécutées par l'utilisateur (102) sur les un ou plusieurs premiers appareils domestiques (122) de l'habitation (101), et/ou
- des informations concernant une ou plusieurs deuxièmes actions possibles pouvant être exécutées par les un ou plusieurs deuxièmes appareils domestiques (123) de l'habitation (101).

3. Procédé (200) selon l'une des revendications précédentes, dans lequel le procédé (200) comprend :
- la détermination de données de sécurité relatives à une exigence de sécurité du processus initié, et
- la détermination de l'ensemble d'actions en fonction des données de sécurité.

4. Procédé (200) selon la revendication 3, dans lequel une complexité de l'ensemble d'actions est adaptée en fonction des données de sécurité de sorte que la complexité de l'ensemble d'actions augmente à mesure que l'exigence de sécurité du processus initié devient plus grande.

5. Procédé (200) selon la revendication 4, dans lequel la complexité de l'ensemble d'actions dépend des suivants :
- d'un nombre d'actions différentes, qui sont à exécuter dans le cadre de l'ensemble d'actions, et/ou
- d'un nombre total des différentes actions possibles pouvant être exécutées au moyen d'un ou plusieurs appareils domestiques disponibles (122, 123) dans l'habitation (101).

6. Procédé (200) selon l'une des revendications précédentes, dans lequel l'ensemble d'actions indique
- une séquence, dans laquelle les un ou plusieurs premières actions et/ou les un ou plusieurs deuxièmes actions doivent être exécutées, et/ou
- une durée admissible maximale, dont l'utilisateur (102) dispose pour exécuter une première action et/ou pour confirmer une deuxième action.

7. Procédé (200) selon l'une des revendications précédentes, dans lequel :
- l'exécution du processus initié nécessite une authentification multi-facteurs et/ou
- la confirmation du processus sur la base des données de confirmation constitue un facteur d'une authentification multi-facteurs pour exécuter le processus initié.

8. Procédé (200) selon l'une des revendications précédentes, dans lequel
- le procédé (200) comprend le fait d'amener l'utilisateur (102) à exécuter une première action spécifiée dans l'ensemble d'actions sur un premier appareil domestique (122),
- le procédé (200) comprend la détermination de données de capteur relatives à la première action, qui est ou a été exécutée par l'utilisateur (102) sur le premier appareil domestique (122), au moyen d'un capteur du premier appareil domestique (122), et
- les données de confirmation comprennent les données de capteur.

9. Procédé (200) selon l'une des revendications précédentes, dans lequel
- le procédé (200) comprend le fait d'amener à ce qu'une deuxième action spécifiée dans l'ensemble d'actions soit exécutée par un deuxième appareil domestique (123),
- le procédé (200) comprend la détermination de données d'entrée de l'utilisateur (102) en lien avec la deuxième action sur une interface utilisateur (117) d'une unité informatique (110) et/ou sur une interface utilisateur d'un appareil domestique (122, 123) de l'habitation (101), et
- les données de confirmation comprennent les données d'entrée.

10. Procédé (200) selon l'une des revendications précédentes, dans lequel le procédé (200) comprend :
- l'exécution du processus lorsqu'il est déterminé que la confirmation du processus a réussi, et/ou
- l'empêchement de l'exécution du processus lorsqu'il est déterminé que la confirmation du processus a échoué.

11. Procédé (200) selon l'une des revendications précédentes, dans lequel
- les un ou plusieurs premiers appareils domestiques (122) comprennent chacun un capteur, au moyen duquel des données de capteur relatives à une première action de l'utilisateur (102) peuvent être acquises, et/ou
- les un ou plusieurs premiers appareils domestiques (122) comprennent :
- une fenêtre et/ou une porte pouvant être ouverte ou fermée dans le cadre d'une première action,
- un corps chauffant, dont la température peut être réglée dans le cadre d'une première action,
- un luminaire, qui peut être allumé ou éteint dans le cadre d'une première action et/ou dont la couleur peut être réglée dans le cadre d'une première action,
- un volet roulant, pouvant être amené dans une position déterminée dans le cadre d'une première action,
- un élément de commande pouvant être actionné dans le cadre d'une première action, et/ou
- une interface utilisateur, sur laquelle une ou plusieurs entrées peuvent être effectuées dans le cadre d'une première action, et/ou
- les un ou plusieurs deuxièmes appareils domestiques (123) comprennent chacun un actionneur par lequel une deuxième action peut être générée, et/ou
- les un ou plusieurs deuxièmes appareils domestiques (123) comprennent :
- une fenêtre et/ou une porte pouvant être ouverte ou fermée dans le cadre d'une deuxième action,
- un luminaire pouvant être allumé ou éteint dans le cadre d'une deuxième action et/ou dont la couleur peut être réglée dans le cadre d'une deuxième action,
- un volet roulant, qui peut être amené dans une position déterminée dans le cadre d'une deuxième action, et/ou
- une interface utilisateur, sur laquelle une ou plusieurs sorties peuvent être générées dans le cadre d'une deuxième action.

12. Système (100) de commande de l'exécution d'un processus initié par un utilisateur (102), dans lequel le système (100) comprend
- une unité informatique, en particulier un smartphone ou un ordinateur,
- au moins un premier appareil domestique,
- au moins un deuxième appareil domestique, et
- au moins une unité centrale (111, 121), qui est configurée pour
- déterminer une entrée de l'utilisateur (102) relative à une initiation du processus via un premier canal,
- déterminer que l'exécution du processus nécessite une confirmation par l'utilisateur (102) par un deuxième canal distinct,
- déterminer un ensemble d'actions pour confirmer le processus, l'ensemble d'actions indiquant une ou plusieurs premières actions devant être exécutées par l'utilisateur (102) sur l'au moins un premier appareil domestique (122) dans une habitation (101) dans laquelle se trouve l'utilisateur (102),
- déterminer des données de confirmation relatives à l'ensemble d'actions, les données de confirmation indiquant si une ou plusieurs premières actions ont été exécutées par l'utilisateur, et
- commander l'exécution ou la non-exécution du processus en fonction des données de confirmation,
- dans lequel
- l'unité informatique est configurée pour acquérir ladite entrée de l'utilisateur,
- le processus comprend un processus lié à des services bancaires sur Internet et/ou un processus de définition d'un mot de passe, et
- l'unité centrale (111, 121) est configurée en outre pour
- déterminer des données d'habitation concernant l'habitation (101) dans laquelle se trouve l'utilisateur (102), et
- déterminer l'ensemble d'actions en fonction des données d'habitation,
- dans lequel l'ensemble d'actions déterminé indique en outre une ou plusieurs deuxièmes actions à exécuter par l'au moins un deuxième appareil domestique (123) dans l'habitation (101) dans laquelle l'utilisateur (102) se trouve, et dont l'exécution doit être confirmée par l'utilisateur (102), et
- dans lequel les données de confirmation indiquent si les un ou plusieurs deuxièmes actions ont été confirmées par l'utilisateur, et le deuxième canal comprend les un ou plusieurs premiers et/ou deuxièmes appareils domestiques (122, 123).

13. Système (100) selon la revendication 12, dans lequel
- le système (100) comprend une première unité centrale (111) configurée pour exécuter le processus initié,
- le système (100) comprend une deuxième unité centrale (121), qui est configurée pour commander les un ou plusieurs premiers et/ou deuxièmes appareils domestiques (122, 123) afin de déterminer les données de confirmation, et
- la première et la deuxième unité centrale (111, 121) sont configurées pour échanger des données relatives à la confirmation du processus initié via une liaison de communication (103).
